Europäisches Patentamt

European Patent Office

Office européen des brevets

(11) Veröffentlichungsnummer: **0 371 536**
**A1**

(12) # EUROPÄISCHE PATENTANMELDUNG

(21) Anmeldenummer: 89202905.9

(51) Int. Cl.⁵: **B60K 5/12, F16F 13/00**

(22) Anmeldetag: 24.10.89

(30) Priorität: 24.10.88 DE 3836191

(43) Veröffentlichungstag der Anmeldung:
06.06.90 Patentblatt 90/23

(84) Benannte Vertragsstaaten:
**ES**

(71) Anmelder: **WOCO Franz-Josef Wolf & Co.**
**Sprudelallee 19**
**D-6483 Bad Soden-Salmünster(DE)**

(72) Erfinder: **Wolf, Franz Josef**
**Sprudelallee 19**
**D-6483 Bad Soden-Salmünster(DE)**
Erfinder: **Pletsch, Hubert**
**Am Quellenrain 13**
**D-6483 Bad Soden-Salmünster(DE)**
Erfinder: **Klüh, Alfred**
**Weiszbachstrasze 7**
**D-6490 Slüchtern-Gundhelm(DE)**
Erfinder: **Nix, Stefan**
**Rotgartenstrasze 4**
**D-6480 Wächtersbach-Aufenau(DE)**

(74) Vertreter: **Jaeger, Klaus, Dr. et al**
**Patentanwälte JAEGER, LORENZ & KÖSTER**
**Pippinplatz 4a**
**D-8035 München-Gauting(DE)**

(54) **Dämpfer.**

(57) Der fluidische Dämpfer weist eine an sich praktisch kraftlos verformbare Arbeitskammer (1) auf, die über eine in einer starren oder steifen Wand (3) ausgebildete Drosselöffnung (4) mit einem hinter der Drosselöffnung (4) liegenden Ausweichkammer (2) verbunden ist. Dieser Dämpfer ist dadurch speziell zur Dämpfung weicher Federn geeignet, daß die verformbare Wand der Arbeitskammer (1) in Richtung der im Betriebszustand bestimmungsgemäß einwirkenden und zu dämpfenden Störschwingungen im unverformten Einbauzustand kein linear vom Auflageanschlußstück bis zum Widerlageranschlußstück durchgehendes Tragvolumenelement aufweist und aus einem druckfest gasdichten und flüssigkeitsdichten Werkstoff, vorzugsweise einem Elastomer, besteht und so dünn bemessen ist, daß sie einer volumenvermindernden Kompression lediglich eine zu vernachlässigende Biegespannung entgegensetzt. Dadurch bleibt die Schwingungscharakteristik der zu bedämpfenden weichen Feder, von der beabsichtigten Dämpfung abgesehen, vom Dämpfer unbeeinflußt.

FIG.1

# Dämpfer

Die Erfindung betrifft einen fluidischen Dämpfer der im Oberbegriff des Patentanspruchs 1 genannten Art sowie dessen Verwendung.

Speziell betrifft die Erfindung einen fluidischen Dämpfer zum Bedämpfen weicher Tragfedern.

Im Bereich der Konsumgüter, insbesondere im Kraftfahrzeugbau, spielen Merkmale des Benutzungskomforts eine zunehmend wichtigere Rolle.

Im Bereich der Federtechnik und der Lagertechnik führt dies zu einem steigenden Bedarf an zunehmend weicheren Tragfedern und Lagerfedern.

Für vergleichsweise schwere Massen führt die Verwendung weicher und sehr weicher Federn jedoch zu zwei prinzipiellen Problemen: (1) Die Federkörper werden mechanisch schwach und instabil, und (2) die Federamplituden werden so groß, daß eine solcherart weich eingestellte Feder tatsächlich den Komfort vermindert, beispielsweise den Fahrkomfort eines Kraftfahrzeugs, anstatt ihn zu verbessern.

Nachdem in jüngerer Zeit mechanisch dauerhafte und feste sowie schwingungstechnisch extrem weiche und akustisch gleichzeitig gut abkuppelnde Gummifederblöcke bekanntgeworden sind (US 4,750,720 A und US 4,776,573 A), haben sich diese Gummifedern in der Praxis erstaunlich schnell eingeführt, obwohl für schwingungssensible Systeme die Frage der Dämpfung des neuen weichen Gummifeder-Systemblocks noch nicht gelöst war.

Zur Bedämpfung weicher Federn, insbesondere zur Bedämpfung von Federn der aus den beiden vorstehend genannten US-Patenten genannten Art, ist aus der deutschen Offenlegungsschrift DE 37 42 340 A1 eine Dämpfervorrichtung bekannt, bei der eine mit dem Auflastanschluß der weichen Tragfeder über eine Koppelstange verbundene Anschlagscheibe zwischen zwei Dämpfungsringen schwingt, die als Wegbegrenzer für den Federweg der weichen Gummifeder dienen. Die ringförmigen Dämpferelemente sind Ringschläuche aus einem elastischen Werkstoff, die mit einem dämpfenden fließfähigen Schüttgut gefüllt sind.

Das Problem dieses Dämpfers liegt darin, daß er gerade dort zu unbefriedigenden Ergebnissen führt, wo die Dämpfung der weichen Tragfeder sowohl interessant als auch gleichzeitig problematisch wird, nämlich im Bereich großer Störamplituden. In diesem Bereich erzeugt der bekannte Dämpfer eine harte, anschlagartige Begrenzung des Federwegs der weichen Tragfeder und vermag damit noch nicht den Durchbruch zu einer komfortablen, d.h. insbesondere weich einsetzenden Dämpfung der weichen Tragfeder herbeizuführen.

Ein ähnliches Dämpfungssystem, bei dem ein zu bedämpfendes dynamisch belastetes Maschinenteil, hier speziell eine elektromagnetisch beaufschlagte Bremse und eine Dämpfervorrichtung separat voneinander ausgebildet und über eine gemeinsame Koppelstange miteinander verbunden sind, ist aus der deutschen Patentschrift DE 684 075 C1 bekannt. Diese Koppelstange ist dabei mit einem hydraulischen Dämpfer verbunden, der aus zwei über eine Drosselstelle miteinander kommunizierenden Arbeitskammern besteht. Das Volumen dieser Arbeitskammern wird über die Drosselstange verändert, wodurch über den Drosselkanal eine übliche hydraulische Dämpfung erhalten wird. Die Arbeitskammern sind durch starre Stirnwände begrenzt, die ein Wellrohr an den Stirnseiten druckfest hydraulisch abdichtend verschließen. Die Wände des Wellrohrs sind in axialer Richtung so stark gewählt, daß in axialer Richtung der Arbeitskammer, d.h. in Richtung der zu bedämpfenden Störkraft, die über die Koppelstange aufgebracht wird, im unbelasteten und unverformten Zustand des Wellrohres kein axial linear durchgehendes Tragvolumenelement in der zylindrischen Wellrohr-Arbeitskammerwand besteht. Dennoch sind diese Arbeitskammerwände axial elastisch, und zwar aufgrund der hohen Biegemomente des Wellrohrmaterials. Mit anderen Worten, die Wellrohre bestehen offensichtlich aus einem Federstahl, zumindest einem elastisch federnden Stahl.

Dieser Dämpfer ist zur Bedämpfung weicher Tragfedern ungeeignet, da er nicht nur als Dämpfer, sondern primär als bedämpfte Stahlfeder wirkt. Eine solche Zusatzfederung würde jedoch die durch die weichen Tragfedern, insbesondere weichen Gummitragfedern, erzielten Fortschritte der weichen Lagertechnik durch Kennlinienverschiebungen und Kennlinienverfälschungen zunichte machen.

Ausgehend von diesem Stand der Technik liegt der Erfindung die Aufgabe zugrunde, einen fluidischen Dämpfer zu schaffen, der speziell für die Verwendung in Verbindung mit weichen Tragfedern geeignet ist, insbesondere für die Verwendung in Verbindung mit weichen Elastomertragfedern, und der diese weichen Tragfedern weich einsetzend zu bedämpfen vermag, ohne dem Tragfederschwingungssystem dafür aus dem Dämpfungsvorgang oder aus dem Dämpfer stammende Störschwingungen aufzuprägen.

Diese Aufgabe wird durch einen fluidischen Dämpfer der eingangs erläuterten Art gelöst, der dadurch gekennzeichnet ist, daß die verformbare Wand der Arbeitskammer aus einem Elastomer oder aus einem anderen druckfest gasdichten und flüssigkeitsdichten, reversibel verformbaren Werkstoff besteht und so dünn bemessen ist, daß sie einer bestimmungsgemäßen Verformung praktisch keine Rückstellkraft und keine nennenswerte Verformungskraft entgegensetzt.

Der wesentliche Gedanke der Erfindung ist dabei darin zu sehen, das Mittel der per se bekannten fluidischen Drosseldämpfung unter Verwendung elastisch verformbarer Arbeitskammern so auszugestalten, daß die verformbaren Wände der Arbeitskammern weder bei einer Volumenverminderung noch bei einer rückholenden oder rückstellenden Volumenvergrößerung der Arbeitskammern Kräfte erzeugen, genauer gesagt, Kräfte von einer solchen Größe erzeugen, die in dem zu bedämpfenden Schwingungssystem zu irgendwelchen merklichen Auswirkungen führen. Dies wird dabei gemäß der Erfindung dadurch erreicht, daß die der Verformung, zumindest der wesentlichen volumenverändernden Verformung, unterliegenden verformbaren Wandbereiche der Arbeitskammer des Dämpfers in an sich zu anderem Zweck und aus anderem Zusammenhang heraus bekannter Weise geometrisch so gestaltet werden, daß zwischen dem Ort der Einleitung der zu dämpfenden, insbesondere dynamischen Störkraft und der als Widerlager dienenden, die Drosselstellen aufweisenden Trägerscheibe oder Widerlagerbasis des Dämpfers auch im unverformten Zustand kein linear durchgehendes Tragvolumenelement vorliegt. In Kombination mit diesem geometrischen Merkmal besteht die Arbeitskammerwand aus einem druckfest gasdichten und flüssigkeitsdichten Werkstoff, der dergestalt bemessen ist, daß er einerseits ausreichend druckfest und dicht gegenüber dem in der Arbeitskammer eingeschlossenen Dämpfungsfluid ist, andererseits aber einer bestimmungsgemäßen Verformung unter Last, insbesondere unter dynamischer Last, praktisch keine Rückstellkraft entgegensetzt und auch keine Verformungsenergie erfordert. Dies bedeutet in der Praxis selbstverständlich, daß die zu verformenden, kein linear durchgehendes Tragvolumenelement aufweisenden Randbereiche der Arbeitskammer im Rahmen der bestimmungsgemäß im Dämpfer wirksamen Kräfte den einwirkenden Störkräften keine merklichen oder signifikant merklichen Verformungskräfte oder Rückstellkräfte entgegensetzen.

Unter einem Tragvolumenelement wird dabei im gegebenen Zusammenhang ein Materialbereich in der Arbeitskammerwand, vorzugsweise also im Elastomer, verstanden, das bei einer radialen Mindestwirkdicke vom Kopf bis zum Fuß bzw. von einem Auflastanschlußstück bis zu einem Widerlageranschlußstück im Material axial linear ununterbrochen durchläuft und in der Lage ist, eine bestimmungsgemäß aufliegende Last oder eine einwirkende dynamische Kraft in Richtung vom Auflastanschlußstück zum Widerlageranschlußstück mit der Kennlinie eines normalen Gummipuffers bzw. eines normalen Elastomerauflagers abzufedern.

Die praktische Folge aus dieser Kammerwandgestaltung ist zunächst einmal die, daß die Arbeitskammer unter Einfalten oder Zusammenfalten der Kammerwand nach außen und/oder nach innen bis auf ein verschwindend kleines restliches Innenvolumen, also praktisch bis auf ein Restvolumen Null, zusammengedrückt werden kann, ohne daß bei dieser Verformung beispielsweise von einem Elastomer der einwirkenden Verformungskraft eine nennenswerte Rückstellkraft entgegengesetzt wird. Im Gegensatz zu Stahl und Federstahl setzt eine vergleichsweise dünne gewellte oder gefaltete Elastomermembran der einwirkenden verformenden Störkraft keine, zumindest keine nennenswerte Biegemomente entgegen.

Wie bereits angedeutet, ist eine solche Dämpferkammerwand vorzugsweise als Faltenbalg realisiert. Beim Zusammendrücken eines solchen Faltenbalges wird der Volumenverkleinerung des von ihm umschlossenen Raums nur die Knick- oder Biegespannung der einwirkenden Beaufschlagung entgegengesetzt, wobei diese Verformungsspannungen des Balges im Rahmen der Gesamt-Kraftbilanz zu vernachlässigende kleine Größen sind, also praktisch mit dem Wert Null angesetzt werden können.

In der einfachsten Gestaltung besteht eine solche Arbeitskammer aus einem einseitig offenen Elastomerzylinder, der mit seiner offenen Seite flüssigkeitsdicht auf einer Stahlscheibe befestigt ist, in der eine Öffnung als Drosselstelle oder in anderer Weise ein Drosselkanal ausgebildet ist. Auf der gegenüberliegenden Seite des Drosselkanals ist eine Ausweichkammer vorgesehen, in die das aus der Arbeitskammer verdrängte Dämpferfluid nach Passieren des Drosselkanals ausweichen kann. Das zumindest im wesentlichen zylindrische einstückige Wandungsteil der Arbeitskammer des Dämpfers weist dabei gemäß der Erfindung auf ungefähr halber Höhe eine Einschnürung auf, so daß der Gesamtkörper die Form einer Sanduhr, genauer die Mantelform eines einschaligen Rotationshyperboloids hat. Entscheidend für die Erfindung ist dabei, daß die Wandung der Arbeitskammer und der Grad der Einschnürung der Mantelwand so aufeinander abgestimmt sind, daß im unverformten Einbauzustand der Arbeitskammer an keiner Stelle eine zylindrische Mantelfläche besteht, die von der Auflastseite der Dämpferkammer bis zur Widerlagerseite durchgehend ununterbrochen im Elastomermaterial verläuft. Als Widerlagerplatte dient dabei die Stahlplatte, in der die Drosselstellen ausgebildet sind. Das dadurch konstruktiv vorgegebene Fehlen jeder relevanten Federwirkung der Arbeitskammer unterscheidet den vorliegenden Dämpfer gemäß der Erfindung von der hydraulisch gedämpften Gummifeder, die aus der deutschen Offenlegungsschrift DE 34 14 547 A1 bekannt ist. Im Gegensatz zum Dämpfer gemäß der vorliegenden Erfindung ist die bekannte Feder gerade dadurch gekennzeichnet, daß sie ein solches Tragvolumenelement im unbelasteten Zustand aufweist, um bis zu einem vorgegebenen Kennlinienpunkt als reines Elastomerauflager, also als Gummifederpuffer, zu wirken. Erst nach Überschreiten einer vorgegebenen Grenzbelastung tritt bei der bekannten Feder ein Einknicken der Wand und damit ein Zusammenbrechen der elastischen Rückstellkraft der Feder ein. Mit anderen Worten, die Konfiguration, die bei der aus dem Stand der Technik bekannten Feder im überkritischen Grenzlastbereich erzeugt wird, ist im Dämpfer gemäß der Erfindung durch eine entsprechende Wandgestaltung bereits so ausgeprägt und vorgegeben, daß er im unverformten Einbauzustand des Dämpfers festgelegt ist. Dadurch kann der hydraulische Dämpfer gemäß der Erfindung als freischwin gendes Dämpferelement zur Bedämpfung weicher Tragfedern dienen, ohne solchen empfindlichen Schwingungssystemen irgendwelche eigenen Störschwingungen aufzuprägen.

Nach einer Ausgestaltung der Erfindung ist die Arbeitskammer als Ringkammer ausgebildet und in der gleichen Weise wie vorstehend für die zentralaxial rotationssymmetrische Kammer beschrieben auf einer Stahlblechringscheibe dichtend befestigt. Dabei weist das axiale Schlauchprofil in Beaufschlagungsrichtung ebenfalls eine einseitige, vorzugsweise beidseitige Einschnürung auf, die als radial innenliegende bzw. radial außenliegende konkave Rille den gesamten ringförmigen Arbeitskammerkörper umzieht. Auch hierbei sind, wie vorstehend für das Rotationsellipsoid beschrieben, die Wandstärke und die Einschnürungen so aufeinander abgestimmt, daß im gesamten Dämpferarbeitskammerkörper kein durchgehendes Tragvolumenelement im Elastomer stehen bleibt.

Bei vielen Anwendungen insbesondere in schwingenden Systemen wird von effektiven Dämpfern erwartet, daß sie in beiden Schwingungsrichtungen, also bidirektional, wirksam sind. Für den Dämpfer gemäß der Erfindung ist dies am einfachsten dadurch zu erreichen, daß auch die Ausweichkammer als Arbeitskammer ausgebildet wird, der Dämpfer also zwei einander gegenüberliegende Dämpferarbeitskammern aufweist, die durch eine steife Wand oder Platte voneinander getrennt sind, in der die Drosselkanäle, Drosselbohrungen oder anderweitig ausgebildeten Drosselstellen vorgesehen sind. Ein solcher bidirektional wirksamer Dämpfer wird vorzugsweise zwischen zwei Anschlägen freischwingend eingesetzt, wobei die beiden gegeneinander zu dämpfenden Maschinenteile entweder je einer an einer der Anschlagscheiben angeschlossen ist oder eines der beiden Maschinenteile an beiden Anschlägen und das andere Maschinenteil an der Tragplatte angeschlossen ist, auf der der bidirektionale Dämpfer mit den beiden einander gegenüberliegenden, meist ringförmigen Dämpferkammern befestigt ist. Dabei ist ein solcheer bidirektionaler Aufbau des Dämpfers mit zwei einander gegenüberliegenden Arbeitskammern nur dadurch möglich, daß die jeweils als Ausweicherkammer dienende Arbeitskammer nicht nur einer volumenverkleinernden Kraft praktisch keine Rückstellkraft entgegensetzt, sondern auch einer volumenvergrößernden Kraft durch Streckung der Tragelementunterbrechungen praktisch keine signifikante Rückstellkraft entgegensetzt.

Durch Vorsehen mehrerer verschiedener Drosselöffnungen oder Drosselkanäle können solche bidirektionalen hydraulischen Dämpfer durch eine einfache Ventilsteuerung, beispielsweise durch eine einfache Rückschlagventilsteuerung in Verbindung mit Drosselkanälen unterschiedlicher lichter Weite, so ausgelegt werden, daß die Dämpfung in beiden Schwingungsrichtungen voneinander wesentlich abweichende Merkmale aufweist.

Als Dämpfungsfluide können sowohl hydraulische als auch pneumatische Medien, insbesondere Luft und an sich gebräuchliche hydraulische Lösungen und Öle, als auch Mischphasen, insbesondere Schäume, eingesetzt werden. Der Fachmann ist ohne weiteres in der Lage, zur Anpassung des Dämpfers an eine speziell zu lösende Dämpferaufgabe ein geeignetes Dämpferfluid auszuwählen und die für das ausgewählte Dämpferfluid erforderlichen Drosselquerschnitte einzustellen.

Ein besonders weiches und komfortables Dämpfungsverhalten wird dadurch erreicht, daß das im unverformten Einbauzustand in der oder in den Arbeitskammern verfügbare Volumen nicht vollständig, sondern lediglich zum Teil, vorzugsweise zu 50 bis 90%, insbesondere zu 80 bis 90%, mit dem Dämpferfluid gefüllt wird. Der verbleibende Raum bleibt mit Luft oder einem Schutzgas gefüllt. Dies führt im Betrieb des Dämpfers dazu, daß das Dämpfungsfluid aufschäumt. Durch entsprechende Zusätze, beispielsweise Tensidzusätze, zum Dämpfungsfluid kann diese erwünschte Schaumbildung unterstützt werden.

Die Erfindung ist im folgenden anhand eines Ausführungsbeispiels in Verbindung mit den Zeichnungen näher erläutert. Es zeigen:

Fig. 1 einen hydraulischen bidirektionalen Dämpfer im unbelasteten Einbauzustand im Axialschnitt;

Fig. 2 den in Fig. 1 gezeigten Dämpfer unter Grenzbelastung; und

Fig. 3 einen Dämpfer der in Fig. 1 gezeigten Art in der Ausbildung als pneumatischer Dämpfer.

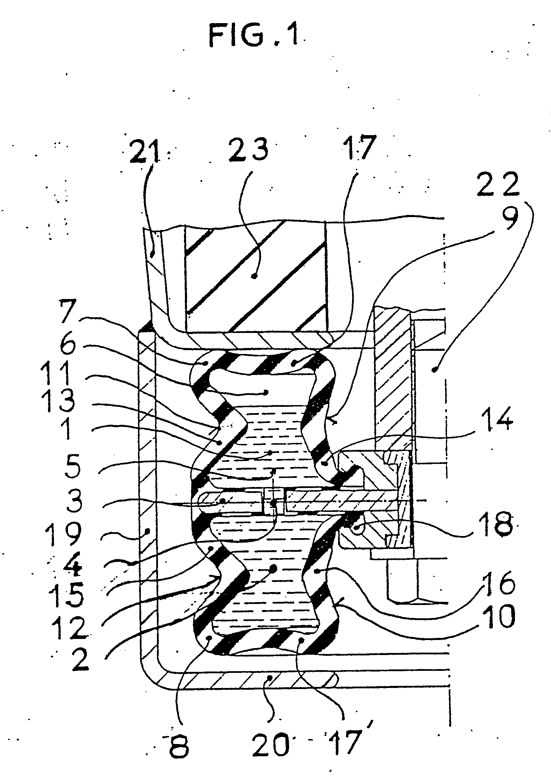

Bei dem im Axialschnitt in Belastungsrichtung in der Fig. 1 gezeigten bidirektionalen Dämpfer sind die beiden Arbeitskammern 1,2 axial übereinanderliegend ringförmig ausgebildet. Die Kammern sind zu beiden Seiten einer starren Trägerscheibe 3 aus Stahl umlaufenden fluiddicht aufgebracht. Die beiden Kammern kommunizieren durch eine Drosselöffnung 4. Die Kammern sind mit einem Dämpfungsfluid 5 gefüllt, das den in Fig. 1 gezeigten insgesamt von beiden Arbeitskammern verfügbaren Raum im unverformten Montagezustand des Dämpfers nicht voll, sondern zu lediglich 80% ausfüllt. Das vom Dämpferfluid nicht ausgefüllte Restvolumen 6 ist mit Luft unter Normaldruck gefüllt.

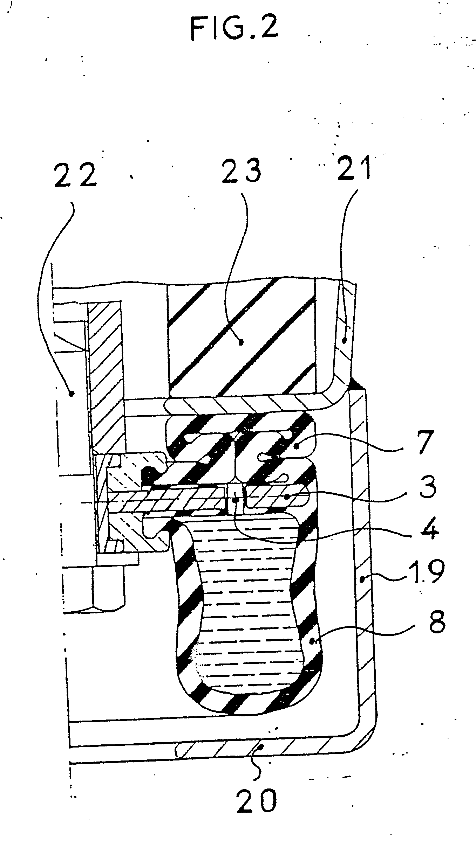

Drei Seiten jeder der beiden an und für sich identischen Arbeitskammern 1,2 sind dreiseitig von einem einstückigen Gummikörper 7,8 umschlossen. Der ringförmige Gummikörper 7,8 ist relativ dünnwandig ausgebildet und weist radial innen auf ungefähr halber axialer Höhe eine Einschnürung 9,10 und radial außen eine Einschnürung 11,12 auf. Die Dicke der seitlichen Wandungen 13,14,15,16 der beiden Gummikörper 7,8 und die Einschnürungen 9,10,11,12 sind dabei so aufeinander abgestimmt, daß keine im Schnitt senkrechte Verbindungslinie vom Auflastbereich 17 zum Widerlagerbereich 18 des Dämpfers existiert, die ausschließlich durch das Elastomer verläuft und an keiner Stelle aus diesem heraustritt. Diese Konfiguration bewirkt, daß die in Fig. 1 gezeigte Arbeitskammer 6 praktisch ohne jede entgegenwirkende Federkraft durch eine Art Zusammenfalten in den in Fig. 2 gezeigten Zustand überführt wird. Dabei ist in den Fig. 1 und 2 das eine von zwei gegeneinander zu dämpfenden Maschinenteilen starr mit einem Lagergehäuseteil 19 verbunden, das beide Arbeitskammern axial hinterschneidend übergreift, und zwar mit Anschlagringscheiben 20,21. Das andere der beiden gegeneinander zu dämpfenden Maschinenteile ist an eine Koppelstange 22 angeschlossen, die fest mit der Trägerscheibe 3 verbunden ist, die die beiden in Beaufschlagungsrichtung axial hintereinanderliegenden Arbeitskammern des hydraulischen Dämpfers trägt. Dabei ist zwischen dem in den Fig. nicht mehr dargestellten Ende der Koppelstange 22 und dem Gehäuse 19 eine weiche Tragfeder, beispielsweise ein Elastomer-Tragfedersystemblock der aus dem deutschen Patent DBP 35 61 171 bekannten Art, angeordnet. Solch ein Systemfederblock hat in dem hier gezeigten Ausführungsbeispiel die Form eines Zylinderblocks mit einer zentral durchgehenden Bohrung, durch die die Koppelstange 22 mit ausreichendem Spiel hindurchgreift.

Auf diese Weise wird ein hydraulisch gedämpftes weiches Gummilager erhalten, das im unbelasteten Zustand beispielsweise die in Fig. 1 gezeigte Konfiguration aufweisen kann. Der zwischen der Anschlagringscheibe bzw. dem Anschlagringfalz 21 und dem Kopfende der Koppelstange 22 angeordnete Gummifeder-Systemblock hält den dem Anschlag 21 zugekehrten Arbeitskammerring 7 gerade eben anliegend oder geringfügig vorgespannt am Anschlag 21. Beim Aufbringen der gedämpft weich abzufedernden Last wird der Gummifedersystemblock komprimiert, so daß sich die der Drosselstelle 4 gegenüberliegende Wand 17 des Arbeitskammerringes 7 vom Anschlag 21 löst und diesem mit Abstand gegenübersteht. Die Abstimmung der Federkenndaten und der axialen Abstände mit der gedämpft abzufedernden Auflast erfolgt dabei in der Weise, daß bei statisch aufliegender Last weder die Kronenfläche 17 der Arbeitskammer 7 am Anschlag 21 noch die Kronenfläche 17' der elastischen Arbeitskammerbegrenzung 8 am Anschlag 22 anliegen, so daß also die gedämpft abzufedernde Last ohne jegliche Dämpferbeeinflussung frei schwingend auf der weichen Elastomertragfeder, die hier in der Figur nicht dargestellt ist, da Lagersysteme dieser Art prinzipiell aus dem Stand der Technik (DE 37 42 340 A1) bekannt sind, aufliegt.

Auf diese Weise tritt der in den Fig. 1 und 2 gezeigte Dämpfer überhaupt erst dann in Aktion, wenn die der statischen gedämpft abzufedernden Nutzlast aufgeprägte Schwingungsamplitude größer als der durch die Systemkonfiguration vorgegebene Abstand zwischen den Kronenflächen 17,17' der Arbeitskammern 7,8 und den ihnen zugeordneten Anschlagflächen 21,22 ist. Wenn dies der Fall ist, wird die je nach Auslenkrichtung bzw. Baufschlagungsrichtung beaufschlagte Arbeitskammer zwischen der Trägerscheibe 3 und dem Anschlagring 21 bzw. 22 zusammengedrückt, ohne daß dabei dieser zusammendrückenden Kraft der Tragfederschwingung irgendeine signifikante Gegenfederkraft aus dem Dämpfer entgegengesetzt wird.

Bei der Volumenverminderung einer der beiden beaufschlagten Arbeitskammern tritt das in der Kammer enthaltene Dämpferfluid durch den Drosselkanal 4 in die gegenüberliegende Arbeitskammer ein, die dabei als Ausweichkammer für den hydraulischen Dämpfer dient. Im Endzustand dieses Vorgangs einer hydraulischen Drosseldämpfung wird der in Fig. 2 dargestellte Zustand des Dämpfers erreicht. Die Arbeitskammerwandung 7 ist vollständig zusammengefaltet und beginnt erst in diesem Grenzzustand als Gummianschlagpuffer federelastisch wirksam zu werden.

Wichtig ist bei diesem Vorgang, daß aufgrund der Einschnürungskonfiguration der Arbeitskammern ein besonders hoher Wirkungsgrad der Dämpfung dadurch erreicht wird, daß, bezogen auf die Ruhelage, bei einem Zusammendrücken einer Arbeitskammer ein Dämpfungsfluidvolumen durch die Drosselstelle hindurch verschoben wird, das größer als das Produkt der effektiven Arbeitsfläche multipliziert mit dem Arbeitshub ist. Die effektive Arbeitsfläche ist dabei die Fläche des kleinsten lichten Innendurchmessers der Arbeitskammer in der senkrechten Projektion auf die starre Kammerbegrenzungsfläche der Trägerscheibe 3. Auf der gegenüberliegenden Ausweichkammerseite erfolgt dabei jedoch gleichzeitig ein radiales Aufdrücken der Einschnürungen der Kammerwandung und damit eine Vergrößerung des effektiven Arbeitsquerschnitts. Auf der aktiven Arbeitskammerseite wird dabei im Effekt also bei bereits geringem Hub ein großes Dämpferfluidvolumen über die Drosselstelle verschoben, also eine, bezogen auf den Hub, große Dämpfungsarbeit geleistet.

Bei Umkehr des Schwingungsvorganges wird dann der gleiche Arbeitszyklus von der entgegengesetzten Seite her durchlaufen.

Dabei können die Dämpfungseigenschaften in der aus Fig. 1 ersichtlichen Weise dadurch weiter verbessert werden, daß die beiden axial einander gegenüberliegenden Arbeitskammern nicht vollständig mit dem Dämpfungsfluid ausgefüllt sind, sondern noch eine Gasphase enthalten, deren Größe ungefähr 10 bis 30%, insbesondere um 20% des Gesamtvolumens der beiden Arbeitskammern beträgt. Bereits nach wenigen Schwingungszyklen wird diese Gasphase bei geeigneter Wahl des Dämpfungsfluids unter Bildung einer Gasblasen enthaltenden flüssigen Phase bzw. sogar einer echten Schaumphase in das Fluid eingearbeitet. Dadurch wird ein Dämpfungsverhalten erreicht, das der mit reinen Flüssigkeitsdämpfern erzielbaren Komfortwirkung durch das Fehlen harter Dämpferanschläge deutlich überlegen ist.

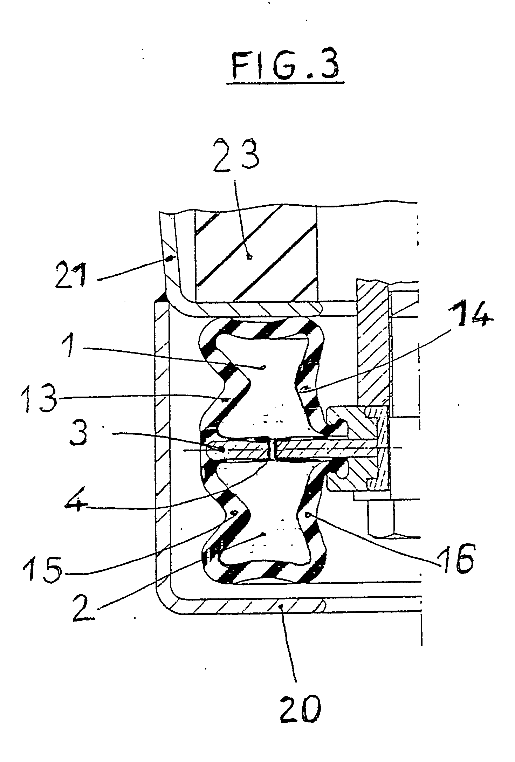

Prinzipiell in gleicher Weise arbeitet der Dämpfer gemäß der Erfindung, wenn er in der in Fig. 3 gezeigten Art als rein pneumatischer Dämpfer ausgestaltet ist. Als Dämpfungsfluid wird dabei vorzugsweise Luft verwendet, die hermetisch abgedichtet in den beiden kommunizierenden Dämpferkammern 1,2 eingeschlossen ist. In der Regel wird dabei diese Luft unter normalem atmosphärischem Druck stehen. Dabei läßt sich jedoch die gewünschte Kennlinie des Dämpfers in einfacher Weise dadurch verschieben, daß der Druck, unter dem die Gasphase in dem pneumatischen Dämpfer eingeschlossen ist, in Richtung eines Unterdrucks oder in Richtung eines Überdrucks abweichend vom Umgebungsdruck eingestellt wird. Dabei sind solchen Druckabweichungen selbstverständlich in beiden Richtungen Grenzen gesetzt. Bei einem zu großen Unterdruck kollabieren die Arbeitskammern, die durch fehlende Rückstellkräfte, d.h. durch fehlende wirksame Elastizität gekennzeichnet sind, während bei zu großem Überdruck der pneumatische Dämpfer zunehmend nach Art einer Gasdruckfeder zu reagieren beginnt.

Vorzugsweise ist der Dämpfer gemäß der Erfindung bei Auslegung als pneumatischer Dämpfer daher mit Luft unter Umgebungsdruck gefüllt.

## Ansprüche

1. Fluidischer Dämpfer, insbesondere für dynamische Lager, mit mindestens einer Arbeitskammer, die mindestens eine verformbare Kammerwand aufweist, ein Dämpfungsfluid enthält und über mindestens eine Drosselöffnung oder mindestens einen Drosselkanal, die in einem zumindest im wesentlichen starren Wandbereich der Arbeitskammer ausgebildet sind, mit einer Ausweichkammer für das Fluid in Verbindung steht, wobei die verformbare Wand (7,8) der Arbeitskammer (1,2) in Richtung der zu bedämpfenden Störkraft im unverformten Zustand kein linear durchgehendes Tragvolumenelement aufweist, dadurch **gekennzeichnet,** dass die verformbare Wand (7,8) der Arbeitskammer (1,2) aus einem Elastomer oder einem anderen druckfest gasdichten und flüssigkeitsdichten Werkstoff besteht und so dünn bemessen ist, dass sie einer bestimmungsgemässen Verformung praktisch keine Rückstellkraft entgegensetzt.

2. Dämpfer nach Anspruch 1, dadurch **gekennzeichnet,** dass die verformbare Kammerwand (7,8) die Arbeitskammer (1,2) polygonal-prismatisch oder zylindrisch umschliesst und in einem in der Beaufschlagungsrichtung liegenden Axialschnitt entweder im ganzen oder, bei einer Ringstruktur des Dämpfers, im Torusschnitt ein sanduhrartiges Profil mit ausgeprägter radialliegender ringförmiger Einschnürung (9,10,11,12) aufweist.

3. Dämpfer nach einem der Ansprüche 1 oder 2, dadurch **gekennzeichnet,** dass in den Drosselöffnungen (4) und/oder Drosselkanälen (Drosselstellen) Durchflusssteuerventile angeordnet sind.

4. Dämpfer nach einem der Ansprüche 1 bis 3, dadurch **gekennzeichnet,** dass die Drosselstellen (4) in an sich für Federn bekannter Weise so dimensioniert und/oder ventilgesteuert sind, dass ein bidirektional wirkender Dämpfer mit mindestens zwei einander über die Drosselstellen (4) gegenüberliegenden Arbeitskammern (1,2) in seinen beiden Arbeitsrichtungen voneinander abweichende Dämpfungseigenschaften aufweist.

5. Dämpfer nach einem der Ansprüche 1 bis 4, dadurch **gekennzeichnet,** dass die Arbeitskammer (1,2) ringförmig ausgebildet und auf einer mit den Drosselstellen (4) versehenen starren Trägerscheibe (3) angeordnet ist, an der, insbesondere zentral (22), eines von zwei gegeneinander zu dämpfenden Maschinenteilen angeschlossen ist, während das andere Maschinenteil an eine Ringfläche (20,21) angeschlossen ist, die in der Radialebene der Arbeitskammer und axial beabstandet zu dieser liegt.

6. Dämpfer nach Anspruch 5,
dadurch **gekennzeichnet,**
dass die Trägerscheibe (3) zwei miteinander kommunizierende und einander axial und konzentrisch gegenüberliegende ringförmige Arbeitskammern (1,2) trägt, die axial und radial zumindest im wesentichen geschlossen umlaufend von einem nach radial innen offenen U-Profil (19,20,21) von aussen umgriffen, insbesondere mit Spiel umgriffen sind, an das eines von zwei gegeneinander zu dämpfenden Maschinenteilen angeschlossen ist, während das andere Maschinenteil an einer Koppelstange (22) angeschlossen ist, die zentral und starr mit der Trägerscheibe (3) verbunden ist.

7. Dämpfer nach einem der Ansprüche 1 bis 6,
dadurch **gekennzeichnet,**
dass die Arbeitskammer (1;2) des Dämpfers mit einem Gas, speziell Luft, als Arbeitsfluid gefüllt ist.

8. Dämpfer nach einem der Ansprüche 1 bis 6,
dadurch **gekennzeichnet,**
dass die Arbeitskammer (1;2) des Dämpfers mit einem hydraulischen Arbeitsfluid gefüllt ist.

9. Dämpfer nach einem der Ansprüche 1 bis 8,
dadurch **gekennzeichnet,**
dass die Arbeitskammer (1;2) des Dämpfers zum Teil, insbesondere zu 50 bis 90 Vol.-%, mit einem hydraulischen Dämpferfluid und daneben zusätzlich mit eine Gasphase (6), insbesondere Luft, gefüllt ist.

10. Dämpfer nach Anspruch 9,
dadurch **gekennzeichnet,**
dass das hydraulische Dämpferfluid (5) schäumt oder mit schäumenden Zusätzen versetzt ist.

11. Verwendung des Dämpfers nach einem der Ansprüche 1 bis 8 zum insbesondere bidirektionalen Bedämpfen weicher Federn, speziell einer Gummifeder, die aus einem Elastomerblock besteht, in dem jeweils mit gleichem Flächenabstand voneinander Scharen von jeweils achsparallel zueinander ausgerichteten Hohlkanälen ausgebildet sind, die einander von Schar zu Schar im Raum kreuzen, ohne einander zu schneiden, und wobei jeder einzelne Kanal mindestens einer dieser Kanalscharen in regelmässigen Abständen im Elastomerblock ausgebildete Hohlräume durchsetzt, deren Querschnittsfläche senkrecht zur Längsachse der Hohlkanäle grösser als die transversale Querschnittsfläche des jeweiligen Hohlkanals ist, und wobei die transversale Querschnittsfläche der Hohlkanäle möglichst klein, gleichzeitig aber zumindest so gross bemessen ist, dass sie bei einer dynamischen Belastung der Feder auf das in den Hohlkanälen und in den mit diesen kommunizierenden Hohlräumen befindliche Medium, in der Regel Luft, praktisch keine Drosselwirkung ausüben.

(5.)

# FIG.1

# FIG.2

## FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-B-1 067 263  (WERNER GENEST) * Spalte 5, Zeile 60 - Spalte 8; Figuren 1,3,5,7,8 * | 1,2,3,5 | B 60 K    5/12 F 16 F  13/00 |
| Y | | 4 | |
| A | | 6,8,11 | |
| | --- | | |
| Y | FR-A-2 117 240  (ABEX CORP.) * Seite 16, Zeile 27 - Seite 17, Zeile 14; Seite 19, Zeilen 12-32; Anspruch 16; Figuren 5,8,9,10 * | 4 | |
| A | | 9 | |
| | --- | | |
| Y,A | DE-A-3 742 340  (VOLKSWAGEN A.G.) * Spalte 2, Zeile 35 - Spalte 3, Zeile 24; Fig. * | 1,2,3,5 ,6,7,9, 11 | |
| | --- | | |
| Y | DE-C-  684 075  (DEMAG) * In der Beschreibung gennant * | 1,2,3,5 ,6 | |
| A | | 8 | |
| | --- | | |
| A | FR-A-2 227 461  (PEUGEOT/RENAULT) * Ansprüche 1-8; Figuren 1,5 * | 1,2,3,6 ,8 | **RECHERCHIERTE SACHGEBIETE (Int. Cl.5)** |
| | --- | | |
| A | DE-B-1 238 554  (GERHARD MEISSNER) * Spalte 1, Zeilen 24-35; Figur 1 * | 1,2,7 | B 60 K F 16 F |
| | --- | | |
| P,X | EP-A-0 322 239  (AVON INDUSTRIAL POLYMERS LTD) * Ansprüche 1,2,7,8,11; Figuren 1,3,5,8,9,10 * | 1,2,3,8 | |
| P,A | | 4,11 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 24-01-1990 | TSITSILONIS L. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument